# EUROPEAN PATENT APPLICATION

(11) **EP 1 364 595 A1**
(43) Date of publication of application: **26.11.2003**
(21) Application number: 03253228.5
(22) Date of filing: 23.05.2003
(51) Int. Cl.: A47B 73/00, B65D 21/02

(54) **Stackable storage racks and modular storage systems**

(30) Priority: 24.05.2002 GB 0212032
(71) Applicant: Kimco Limited, Acton, London W3 7SZ (GB); Vomax International Co. Limited, Neihu, Taipei 114 (TW)
(72) Inventor: Tully, Russell James, London W3 7SZ (GB); Lin, Clark, Neihu, Taipei 114 (TW)
(74) Representative: Pluckrose, Anthony William

(57) **Abstract**

The present invention relates to a product holding element (10) which is stackable with a second similar element. The element has a member (13) which is adapted to support and be resiliently clipped to a member (15) of the second element. The resilience is provided by the flexibility of the element's construction.

## Description

This invention relates to stackable storage racks. More particularly but not exclusively, the invention relates to stackable wine racks. The invention also relates to a modular storage system.

It is known to provide stackable storage racks for storing a variety of items, for example, wine bottles, CD's, DVD's, video or audio cassettes, shoes, vegetables. Generally, such storage racks are of rigid construction, whether they are pre-assembled or intended for self-assembly. Also, often they simply rest one on top of the other and rely on their own weight and/or that of the items being stored to remain stacked.

According to the invention there is provided a product holding element which is stackable with a second similar element, the element having a member which is adapted to support and be resiliently clipped to a member of the second element, the resilience being provided by the flexibility of the element's construction.

Preferably the element has at least one substantially horizontal member, and substantially downwardly facing clip means for engagement with the substantially horizontal member or a respective substantially horizontal member of a similar element below.

The clip means preferably comprises at least one U-shaped bend formed by the construction of the element.

The element may be formed of metal wire, and is preferably chromium plated or coated with plastics material, or is of stainless steel.

The element may be of continuous construction.

In one embodiment the element is of elongated construction, and has a pair of feet at each end, each of which feet forms a U-shaped bend to clip onto a respective substantially horizontal member of a similar element below.

Preferably the feet are connected to side members and when two elements are stacked together, the feet of the upper element are located in locking relation between the respective side members of the element below.

In one embodiment the element is a wine rack. Preferably the element has longitudinal members formed to hold a desired number, for example, three or more wine bottles in at least one row in spaced relation with each other.

In another embodiment the element is a linear storage rack for different items, for example, CD's, DVD's, audio or video cassettes or the like.

In a further embodiment the element is an open container for holding one or more items, for example, vegetables, soaps or other bath products.

The invention also provides a modular storage system comprising at least two similar product holding elements which are stackable one on top of another, wherein the lower element has a member which supports and is resiliently clipped to the upper element when the upper element is stacked thereon, the resilience being provided by the flexibility of the element's construction.

The invention further provides a stackable wine rack comprising a plurality of modular elements, each element comprising holding means for storing wine bottles in at least one row, wherein adjacent elements are interconnected by means which support and resiliently clip one element to the other, the resilience being provided by the flexibility of the element's construction.

In a second aspect the present invention provides a modular storage system comprising at least two product holding elements, each holding element comprising:
a base section for supporting stored items;
extending upwardly from the base section a pair of spaced apart arms which space from the base section a pair of spaced apart support members; and
a pair of recesses on the underside of the base section which either face each other or face away from each other; wherein:
   the product holding elements are stacked vertically in the storage system with the spaced apart support members of a first holding element supporting the base section of a second holding element located thereabove and with the support elements of the first holding element engaged in the recesses of the base section of the second holding element; and
   the securing of the support members in the recesses requires the flexing of at least one of the pair of spaced apart arms towards or away from the other whereby once the support members are secured in the recesses the product holding elements are securely linked and cannot be separated without again flexing at least one of the spaced apart arms.

Preferably the clipping together of adjacent elements is effected by flexing a member of one of the units relative to a member of the other unit.

It is also preferred that the elements are nestable when not in use, or for transport or storage purposes.

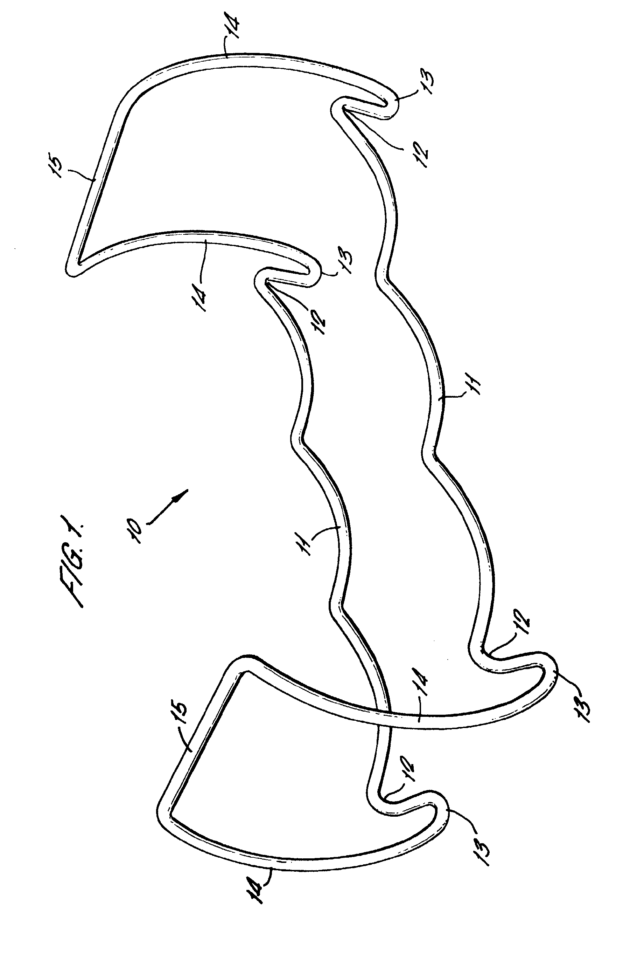

By way of example, a specific embodiment in accordance with the invention will now be described with reference to the accompanying drawings in which:-
Figure 1 is a perspective view of a wine rack;
Figure 2 shows two racks stacked one on top of another; and
Figure 3 shows the two racks separated and nested together for transport or storage purposes.

Referring to the drawings, there is shown a modular storage system in which two or more identical wine racks are stacked one on top of the other.

In this embodiment, the wine racks are constructed of chromium plated steel wire, but the wire may, for example, be plastics coated or of stainless steel.

Each wine rack 10 is of elongated construction including a pair of longitudinal members 11 shaped for holding in this embodiment three wine bottles (not shown) in spaced relation with each other. Each end of each longitudinal member 11 forms a downwardly facing U-shaped bend 12 which is reverse bent to form a foot 13 and then an upwardly extending side member 14. The upper ends of the two side members 14 at the respective end of the rack are joined by a horizontal member 15. The rack 10 is thereby of continuous construction, formed from a loop of wire.

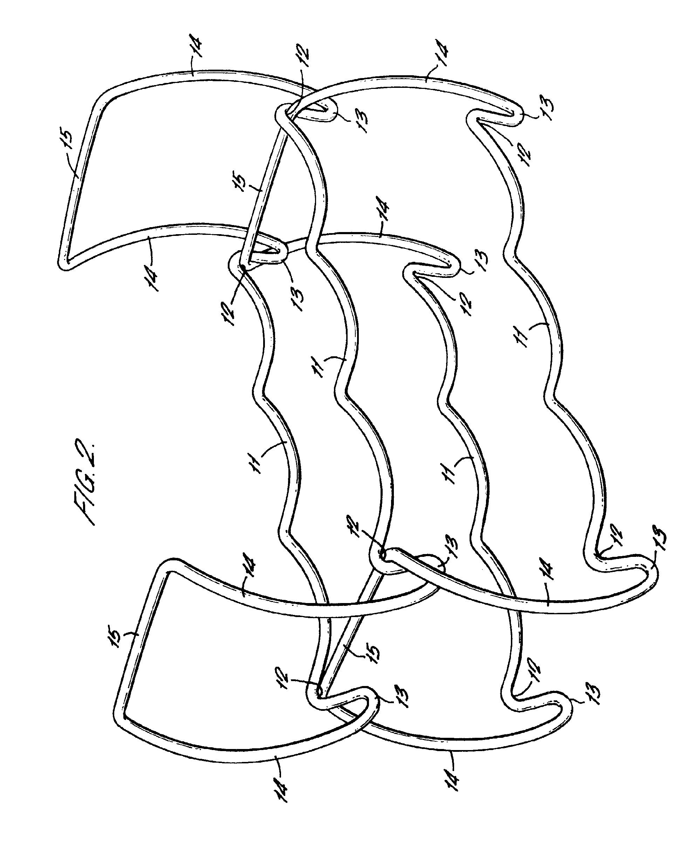

As shown in Figure 2, two or any number of racks 10 are stackable, one on top of another (only two racks being shown), by engagement of the feet 13 of the upper rack over the horizontal members 15 of the lower rack. For stacking the two racks, the feet 13 at one end of the upper rack are engaged over the respective horizontal member 15 of the lower rack by slight flexing of the feet inwardly, if necessary. The flexibility of the side members 14 then allows the feet 13 at the other end of the upper rack to clip onto the respective horizontal member 15 of the lower neck, both horizontal members 15 locating in the bends 12 of the respective feet 13. The horizontal members 15 of the lower rack thereby provide support for the upper rack as well as the means for clipping the upper rack onto the lower rack. The feet 13 of the upper rack also fit inside the respective side members 14 of the lower rack so that the upper rack is locked laterally to the lower rack, both forward and back as shown and side to side, i.e. in all four lateral directions.

In this embodiment, the bends 12 formed by the respective feet 13 face each other, as shown in the drawings. Alternatively, the bends 12 may face away from each other, whilst allowing the feet of the upper rack to engage the horizontal members of the lower rack to lock the racks together in stacked relation.

In either case, it will be appreciated that during stacking of the two racks, the side members 14 of the lower rack are flexed longitudinally of the rack, at the same time as the feet 13 of the upper rack are flexed transversely, thereby locking the two racks together.

To separate the two racks 10, the upper rack is lifted at one end relative to the lower rack, whereby the resilience of the construction of the lower rack allows the feet 13 of the upper rack to be disengaged from the respective horizontal member 15 of the lower rack.

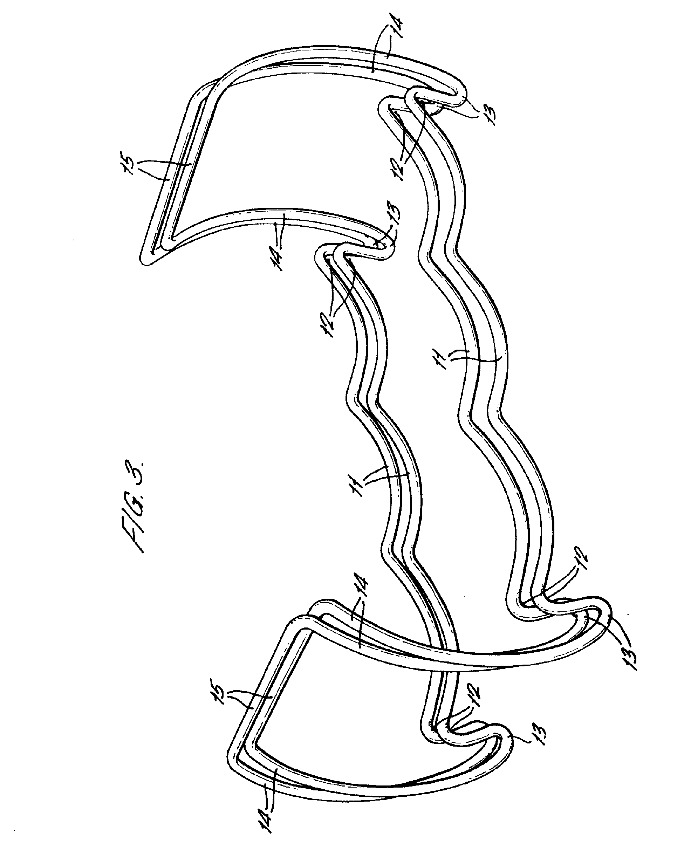

When not in use, the two racks and any number of further identical racks 10 can be nested together as shown in Figure 3 for transport or storage purposes. No further disassembly or tools are required.

If desired, the pair of longitudinal members 11 of each rack 10 may be shorter or longer than is illustrated, and shaped to hold any number of wine bottles in a row. Each rack may also have more than one pair of longitudinal members interconnected at their ends by the side members 14, whereby each rack is adapted to hold the desired number of bottles in two or more rows, one above the other. Furthermore, the longitudinal members 11 of the or each pair may be provided at different relative heights to allow the wine bottles to be stored at a desired angle to the horizontal.

It will be appreciated that the same principle of construction and stacking may be employed for storage racks intended to hold different items other than wine bottles.

For example, the longitudinal members may be generally straight to form a shelf type rack for CD's, DVD's, audio or video cassettes or the like.

The longitudinal members may also be straight and at different heights for the purpose of storing shoes.

In a further embodiment, the general shape could be rectangular or circular to provide a suitable container for vegetables or, for example, soaps or other bath products.

The invention is not limited to the specific details of the embodiments described above. For example, the product holding elements to be stacked are intended to be similar so that they are matching, but need not be identical members, provided that the support and resilient clipping features between adjacent elements are maintained.

## Claims

1. A product holding element which is stackable with a second similar element, the element having a member which is adapted to support and be resiliently clipped to a member of the second element, the resilience being provided by the flexibility of the element's construction.

2. A product holding element as claimed in Claim 1, wherein the element has at least one substantially horizontal member, and substantially downwardly facing clip means for engagement with the substantially horizontal member or a respective substantially horizontal member of a similar element below.

3. A product holding element as claimed in Claim 2, wherein the clip means comprises at least one U-shaped bend formed by the construction of the element.

4. A product holding element as claimed in any one of the preceding claims, wherein the element is formed of metal wire.

5. A product holding element as claimed in Claim 4, wherein the element is of continuous construction.

6. A product holding element as claimed in any one of the preceding claims, wherein the element is of elongated construction, and has a pair of feet at each end, each of which feet forms a U-shaped bend to clip onto a respective substantially horizontal member of a similar element below.

7. A product holding element as claimed in Claim 6, wherein the feet are joined to side members and when two elements are stacked together, the feet of the upper element are located in locking relation between the respective side members of the element below.

8. A product holding element as claimed in any one of the preceding claims, wherein the element is a wine rack.

9. A product holding element as claimed in Claim 8, wherein the element has longitudinal members formed to hold a desired number of wine bottles in at least one row in spaced relation with each other.

10. A product holding element as claimed in any one of Claims 1 to 7, wherein the element is a linear storage rack.

11. A product holding element as claimed in any one of Claims 1 to 7, wherein the element is an open container for holding one or more items.

12. A modular storage system comprising at least two similar product holding elements which are stackable one on top of another, wherein the lower element has a member which supports and is resiliently clipped to the upper element when the upper element is stacked thereon, the resilience being provided by the flexibility of the element's construction.

13. A system as claimed in Claim 12, wherein each element is constructed as claimed in any one of Claims 1 to 11.

14. A system as claimed in Claim 12 or Claim 13, wherein the elements are nestable when not in use, or for transport of storage purposes.

15. A stackable wine rack comprising a plurality of modular elements, each element comprising holding means for storing wine bottles in at least one row, wherein adjacent elements are interconnected by means which support and resiliently clip one element to the other, the resilience being provided by the flexibility of the element's construction.

16. A stackable wine rack as claimed in Claim 15, wherein the clipping together of adjacent elements is effected by flexing a member of one of the units relative to a member of the other unit.

17. A stackable wine rack as claimed in Claim 15 or Claim 16, wherein the elements are nestable when not in use, or for transport or storage purposes.

18. A modular storage system comprising at least two product holding elements, each holding element comprising:
a base section for supporting stored items;
extending upwardly from the base section a pair of spaced apart arms which space from the base section a pair of spaced apart support members; and
a pair of recesses on the underside of the base section which either face each other or face away from each other; wherein:
the product holding elements are stacked vertically in the storage system with the spaced apart support members of a first holding element supporting the base section of a second holding element located thereabove and with the support elements of the first holding element engaged in the recesses of the base section of the second holding element; and
the securing of the support members in the recesses requires the flexing of at least one of the pair of spaced apart arms towards or away from the other whereby once the support members are secured in the recesses the product holding elements are securely linked and cannot be separated without again flexing at least one of the spaced apart arms.

19. A modular storage system as claimed in claim 18 wherein each holding element comprises two pairs of spaced apart arms extending upwardly from the base section and the support members comprise two parallel spaced apart bars providing the support members, a first bar extending between a first two of the arms and the second extending between a second two of the arms, wherein to secure the support members in the recesses at least two arms linked by one of the bars must be flexed either toward or away from the other two arms linked by the other bar.

20. A modular storage system as claimed in claim 19 wherein the base section, the arms and the bars are all formed from a continuous loop of wire and the recesses are formed as a pair of bends in the loop which act as feet for the lowermost holding element.

21. A modular storage system as claimed in claim 20 wherein the loop of wire is formed with four recesses as part of four feet, two of the recesses being engaged by the first bar and the other two of the recesses being engaged by the second bar, and wherein the feet each engage a surface of an arm and thereby prevent sliding of a holding element along the bars supporting the holding element.

22. A product holding element substantially as hereinbefore described with reference to and as shown in the accompanying drawings.

23. A modular storage system substantially as hereinbefore described with reference to and as shown in the accompanying drawings.

24. A stackable wine rack substantially as hereinbefore described with reference to and as shown in the accompanying drawings.
